# EUROPEAN PATENT APPLICATION

(11) **EP 1 128 513 A1**
(43) Date of publication of application: **29.08.2001**
(21) Application number: 00200587.4
(22) Date of filing: 21.02.2000
(51) Int. Cl.: H02G 7/20

(54) **Supporting tower**

(71) Applicant: ABB T&D Technology Ltd., 8050 Zürich (CH)
(72) Inventor: Villa, Paolo, 20052 Monza (IT)
(74) Representative: Giavarini, Francesco

(57) **Abstract**

A tripping device for opening the contacts of a circuit breaker associated therewith following the detection of a residual current exceeding a preset limit by a detecting device, comprising an enclosure for containing and supporting a kinematic mechanism which has:
-- an actuation lever and a tripping lever, which are geometrically coupled to each other and are both pivoted on a first pivot of the enclosure, the actuation lever being operatively connected to an actuator which is actuated by the detecting device;
-- an indicator lever, with which an actuation spring is associated, and a transmission lever, said indicator and transmission levers being mutually operatively coupled and being both pivoted on a second pivot of the enclosure, said transmission lever having a coupling pivot for coupling to the kinematic system of the associated circuit breaker;
-- an engagement lever, which is geometrically coupled to the indicator lever and is detachably connected to the tripping lever.

## Description

The present invention relates to a tower for supporting the conductors of a three-phase overhead transmission line; in particular, in the following description the word tower includes any kind of supports for power transmission lines, such as pylons, poles, pillars, masts and the like.

As it is known in power transmission systems, a series of spaced towers are used to support the phase conductors along the line route; the connection between the phase conductors and the towers is arranged so as to satisfy some requirements which are fundamental for guaranteeing a right and safe functioning of the line. In particular, the phase conductors are connected to the structure of the tower in such a way that the distance between adjacent conductors is sufficient for protection from phase-to-phase voltage breakdown; in addition, the clearance between each conductor and the structure of the tower must be sufficient to prevent arcing between the two elements. Furthermore, also the distance between each conductor and the ground has to be sufficient in order to meet safety needs.

Clearly, the higher is the voltage of the line, the larger must be the distance between adjacent conductors, between each conductor and the structure of the tower, and between each conductor and the ground; in addition, safety distances must be respected also when the conductors sway under wind actions.

These requirements affect the overall dimensions of the supporting tower, the right of the way required by the line and consequently its land occupation, thus affecting the visual impact and the cost of the line itself.

Several constructive solutions have been adopted in order to meet the aforementioned requirements; although these solutions allow a satisfactory, right and safe functioning of the line, at the present state of the art they still present some drawbacks.

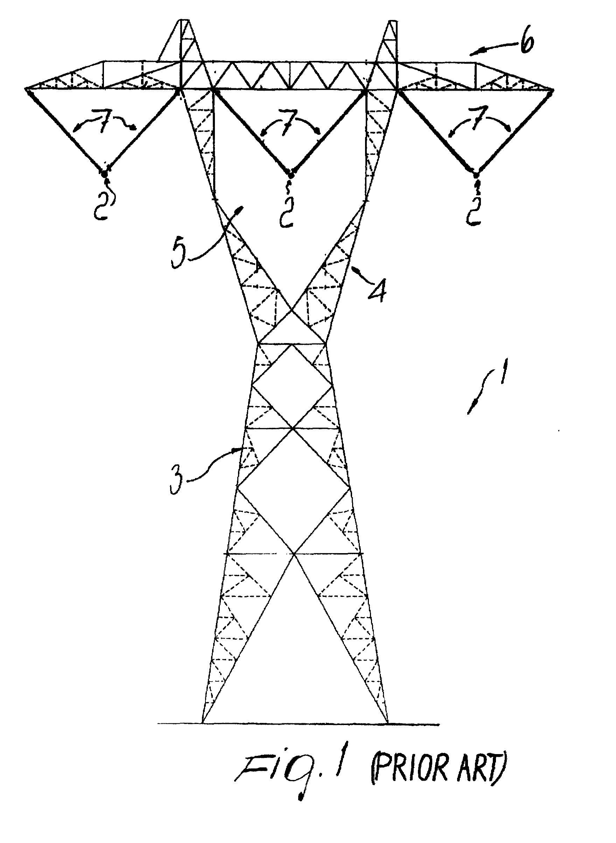

For example, figure 1 shows a tower 1 supporting the conductors 2 of a three-phase transmission line in a flat configuration, according to a solution well known in the art; in particular, the tower 1 has a lattice structure which comprises a base 3 connected to a supporting surface, generally the ground, and a head 4 which is shaped so as to define a window 5.

As illustrated, according to this solution, each conductor 2 is connected to the horizontal cross-arm 6 of the tower 1 by means of a couple of insulator strings 7, generally made of ceramic or glass; in particular, this constructive realisation implies that two conductors 2 are positioned externally and substantially symmetrical with respect to the window 5, while the third phase conductor 2 passes through the window 5 and is connected to the internal side of the head 4.

The main drawback of this solution resides in the fact that some structural elements of the tower are interposed between two phases of the line; as a consequence, in order to allow a right and safe functioning of the line, the phase-to-phase horizontal distances must be kept very high, thus resulting in an increase of the frontal width of the tower and of the right of way required by the line, and therefore negatively affecting its visual impact and cost.

Another well known solution in the art involves the use of supporting towers, for example of the frustum-pyramid type, in which the overall height of the tower is increased with respect to the one above described, but the window is configured in such a way that all phase conductors pass through the window itself, thus preventing the interposition of structural elements between two phases.

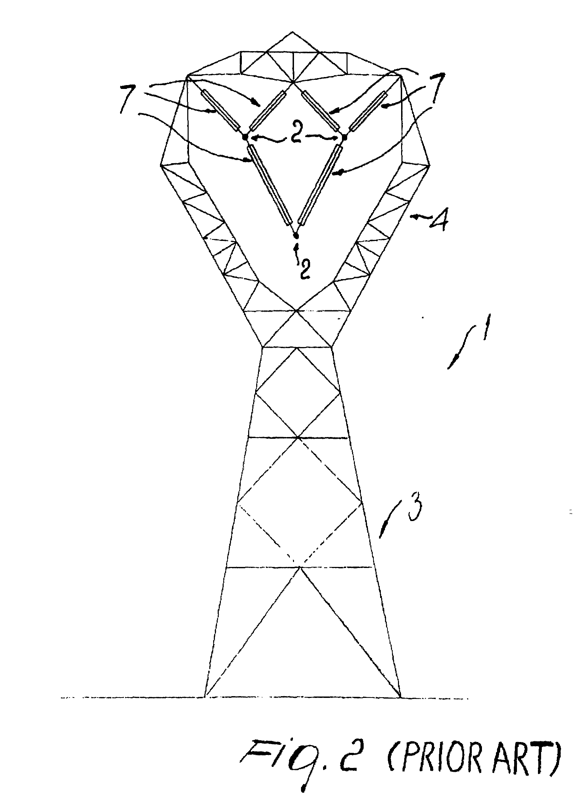

An example of this kind of solution is shown in figure 2, wherein technically equivalent elements to those of figure 1 have been indicated with the same reference numerals.

This solution allows a significant reduction of the phase-to-phase distance, with respect to the flat configuration illustrated above; consequently, the frontal width of the tower is reduced, as well as the right of way required by the line.

One of the main shortcomings of this solution resides in the fact that the phase conductors are generally connected to the tower in a mutually dependent manner, as clearly shown in figure 2; in this case, the phases exert an influence on each other, either mechanically or electrically, and can lead to dangerous situations, especially when the conductors sway under the action of winds, as this constructive configuration facilitates big displacements.

Moreover, mechanical stress is completely transferred to the top part of the tower 1, thus resulting in an increase of the moment applied to the base of the tower, and overstressing the insulators 7, which are directly connected to the tower.

Another disadvantage of this kind of solutions is that, when each phase conductor is constituted by a bundle of conductors connected to each other by means of interlocking joints, in a manner well known in the art, it is necessary to use special and not standard fittings.

Yet other drawbacks of these solutions are due to the fact that the insulators 7 used, besides being heavy, have different length; in this way, they do not allow a full standardization and size optimisation according to specific applications, for example taking into account the level of pollution of the installation site. In addition, stringing operations of the conductors are performed in different steps because it is necessary to install a first insulator, which supports the bundle of each phase, then laying the cables, and finally installing the other insulators.

The main aim of the present invention is to provide a tower for supporting the conductors of a three-phase line, which allows for optimisation of the distribution of electrical stress in the phases and the reduction of the mechanical stress exerted on the tower itself, thus allowing the structural lightening of the tower with consequent reduction of its costs.

Within the scope of this aim, an object of the present invention is to provide a tower for supporting the conductors of a three-phase line, in which it is possible to have phase conductors mechanically independent to each other, thus reducing big displacements, especially under windy conditions.

Another object of the present invention is to provide a tower for supporting the conductors of a three-phase line, in which it is possible to use insulators having the same length for all phases, thus allowing to use standardized fittings and to size the insulators themselves according to applications or specific needs, e.g. the level of pollution of the installation site.

A further object of the present invention is to provide a tower for supporting the conductors of a three-phase line, which facilitates the stringing of the lines.

Another object of the present invention is to provide a tower for supporting the conductors of a three-phase line, which is highly reliable, relatively easy to manufacture at competitive costs.

This aim, as well as these and other objects which will become apparent in greater detail hereinafter, are achieved by a tower for supporting the conductors of a three-phase transmission line, comprising:
- a body having a base suitable for connection to a supporting surface and a head configured so as to define a window through which the phase conductors of the line pass;
- a first and a second insulator having two opposite ends operatively connected to a first phase conductor and to said head, respectively;
- a third and a fourth insulator having two opposite ends operatively connected to a second phase conductor and to said head, respectively; characterized in that it comprises:

- a fifth insulator having a first end operatively connected to a third phase conductor, and a second end connected to said head through the interposition of first cantilever-shaped means;
- a sixth insulator having a first end operatively connected to said third phase conductor, and a second end connected to said head through the interposition of second cantilever-shaped means.

In this way, a part of the stress exerted by the conductors is not transmitted to the top part of the head but is applied to a lower part of the structure, thus allowing the reduction of the moment applied to the base of the tower and definitively lightening the structure of the tower itself with consequent reduction of costs.

Further characteristics and advantages of the invention will become apparent from the description of a preferred, but not exclusive embodiment of the tower according to the invention, illustrated by way of a non-limiting example in the accompanying drawings in which:
figure 1 is a front view of a supporting tower connected to the conductors of a three-phase transmission line according to an embodiment known in the art;
figure 2 is a front view of a supporting tower connected to the conductors of a three-phase transmission line according to a second embodiment known in the art;
figure 3 is a front view showing a supporting tower connected to the conductors of a three-phase transmission line according to the invention;
figure 4 is a view showing the head of the tower of figure 3, connected to the phase conductors of a three-phase transmission line, according to the invention.

In the following description, identical reference numerals designate identical or technically equivalent elements.

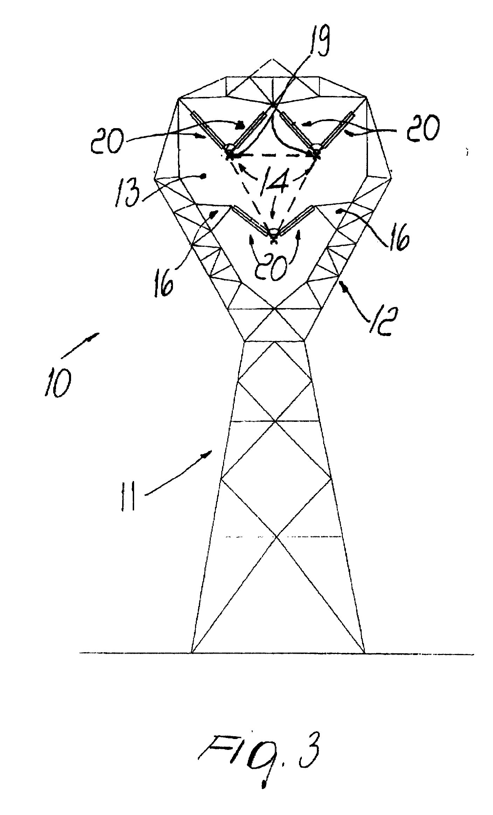

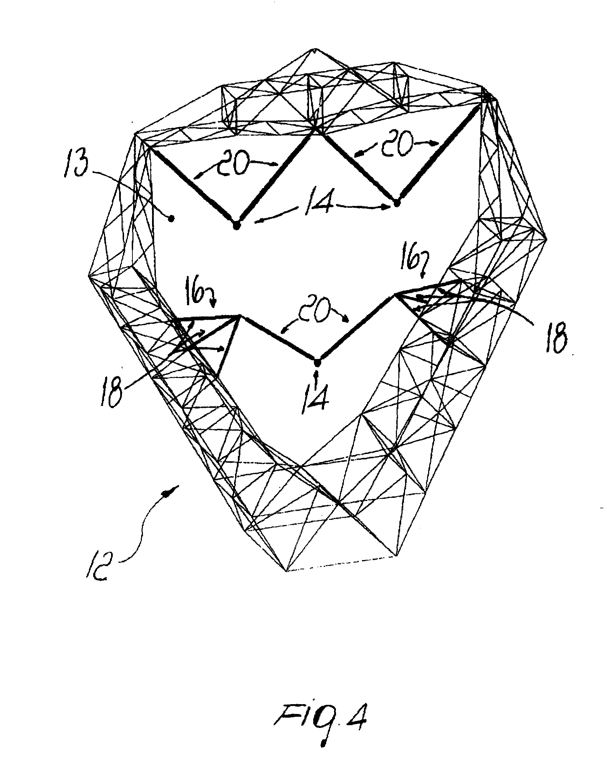

With reference to figures 3 and 4, a tower 10 for supporting the conductors of a three-phase transmission line, has a body comprising a base 11, suitable for connection to a supporting surface, generally the ground, and a head 12 configured so as to define a window 13 through which the phase conductors pass; according to the various applications, each phase conductor can be constituted by a single conductor, as schematically shown in figure 4, or by a bundle of conductors connected to each other by means of suitably shaped interlocking joints, indicated by the reference numeral 19 in figure 3.

As illustrated, the tower 10 has a lattice structure which can be constituted by a plurality of cold formed elements, according to a solution which allows to reduce the visual impact of the tower by reducing the number of structural elements and therefore the overall weight of the tower; alternatively, the lattice structure can be constituted by a plurality of hot rolled elements. In the embodiment illustrated in figures 3 and 4, the tower 10 is of the frustum-pyramid type; clearly, other types of towers having a window head can be used, such as H-shaped towers with an additional cross arm in order to form a window, or Y-shaped, or other suitably shaped towers.

In particular, in the tower according to the invention, a first phase conductor 14 is suspended from the upper part of the tower head 12 by means of a couple of insulators 20; for the sake of simplicity, with the indication insulator 20, will be indicated hereinafter a single insulator, or overally, a string of insulators. Each of said insulators 20 has a first end operatively connected to the conductor 14, and a second end, substantially opposite to the first end, which is connected to the internal side of the head 12. Analogously, a second phase conductor 14 is suspended from the upper part of the tower head 12 by means of a second couple of insulators 20, as previously described; as shown in figure 3, said second phase conductor 14 is positioned substantially aligned and symmetrical to the first one, with respect to a vertical symmetry axle of the tower. The connections between each insulator and the corresponding conductor, and between each insulator and the tower are realized by means of suitable fastening means, according to solutions which are well known in the art and therefore not further described.

A third phase conductor 14 is connected to the internal side of the head 12 in a lower position along said vertical symmetry axle, by means of a fifth insulator 20 and of a sixth insulator 20; advantageously, in the tower according to the invention, the fifth insulator 20 has a first end operatively connected to the third phase conductor 14, and a second end, substantially opposite to the first end, which is connected to the structure of the head 12 through the interposition of first cantilever-shaped means 16. In an equivalent manner, also the sixth insulator 20 has a first end operatively connected to the third conductor 14, and a second end connected to the internal side of the head 12 through the interposition of second cantilever-shaped means 16.

With this solution, the phase conductors 14 are connected to the tower in an independent manner thus reducing their reciprocal electro-magnetic influence and the danger of big displacements, typical of the dependent-phase configurations. Furthermore, the load exerted by the third conductor is not transferred to the top part of the tower but is applied to a lower part; accordingly, the bending moment applied to the base of the tower is reduced and therefore it is possible to lighten the structure of the tower itself and to reduce its cost. In addition, the insulators 20 which are connected to the uppermost part of the tower are not overstressed, as instead it occurs in the prior art.

As shown in greater details in figure 4, in the tower according to the invention, the first and the second cantilever-shaped means 16 comprise at least a first, a second and a third element 18 which are connected to each other so as to form a substantially pyramid-shaped body. The elements 18 can be constituted by suitably profiled components, for example rods made of metal or composite insulating material, according to a solution which can allow to reduce the length of insulators 20.

The two pyramid-shaped bodies have their base connected to the corresponding internal side of the head, and the top operatively connected to the second end of the fifth insulator 20 and of the sixth insulator 20, respectively. The connections cantilever means 16-insulators 20, cantilever means 16-tower, and insulators- phase conductor 14 are realized according to solutions well known in the art and therefore not described in details.

Further, the two pyramid shaped bodies are disposed substantially symmetric to each other, with respect to said third phase conductor 14, and are configured so as their bases form triangles; alternatively, the pyramid-shaped bodies can comprise more than three elements 18, for example four elements configured so as to form a quadrilateral base.

Other significant advantages of the tower according to the invention are due to the fact that, thanks to the described configuration, each phase conductor 14 and the corresponding couple of insulators associated therewith are arranged in an inverted-delta compact configuration; in addition, the three phase conductors 14 are positioned at the tops of an immaginary substantially equilateral triangle, shown in dashed line in figure 3.

As a consequence, the mutual electro-magnetic influence exerted by each phase onto each other is equal among them, thus allowing to eliminate the need of transposition poles which are instead necessary in the conventional art, moreover for long transmission lines. Further, with this configuration the impedance of the line is reduced, and the power transmitted is increased with respect to other configurations, such as the flat configuration schematically shown in figure 1. The radio interference, usually generated by power lines, is reduced too.

Other advantages of the tower according to the invention reside in the fact that, by suitably sizing the pyramid bodies, all insulators 20 can have the same length and can be optimised according to application needs, e.g. by reducing the length of the insulators with respect to the pollution level. Further, it is also possible to use standardized accessories, such as standard interlocking joints, and the stringing of the line is easier because all insulators can be mounted before starting to string the conductors.

In addition, the insulators 20 have a substantially tubular body which is made of composite material and is externally covered with silicone sheds; in this way their weight is reduced, with respect to the conventional insulators made of ceramic or glass.

The tower thus conceived is susceptible of modifications and variations, all of which are within the scope of the inventive concept; all the details may furthermore be replaced with technically equivalent elements. In practice, the materials used, so long as they are compatible with the specific use, as well as the dimensions, may be any according to the requirements and the state of the art.

## Claims

1. A tower for supporting the conductors of a three-phase transmission line, comprising:
- a body having a base suitable for connection to a supporting surface and a head configured so as to define a window through which the phase conductors of the line pass;
- a first and a second insulator having two opposite ends operatively connected to a first phase conductor and to said head, respectively;
- a third and a fourth insulator having two opposite ends operatively connected to a second phase conductor and to said head, respectively;
**characterized in that** it comprises:
- a fifth insulator having a first end operatively connected to a third phase conductor, and a second end connected to said head through the interposition of first cantilever-shaped means;
- a sixth insulator having a first end operatively connected to said third phase conductor, and a second end connected to said head through the interposition of second cantilever-shaped means.

2. A tower for supporting the conductors of a three-phase transmission line according to claim 1, **characterized in that** said first cantilever-shaped means comprise at least a first, a second and a third element which are connected to each other so as to form a first pyramid shaped body, said first pyramid shaped body having the top operatively connected to said second end of the fifth insulator and the base connected to the internal side of the head.

3. A tower for supporting the conductors of a three-phase transmission line according to claim 1, **characterized in that** said second cantilever-shaped means comprise at least a first, a second and a third element which are connected to each other so as to form a second pyramid shaped body, said second pyramid shaped body having the top operatively connected to said second end of the sixth insulator and the base connected to the internal side of the head.

4. A tower for supporting the conductors of a three-phase transmission line according to claims 2 and 3, **characterized in that** said first pyramid shaped body and said second pyramid shaped body are disposed substantially symmetric to each other with respect to said third phase conductor.

5. A tower for supporting the conductors of a three-phase transmission line according to one or more of the preceding claims, **characterized in that** said first, second and third phase conductor are positioned at the tops of a substantially equilateral triangle.

6. A tower for supporting the conductors of a three-phase transmission line according to one or more of claims 2-4, **characterized in that** said first pyramid body and/or said second pyramid body are made of metal.

7. A tower for supporting the conductors of a three-phase transmission line according to one or more of claims 2-4, **characterized in that** said first pyramid body and/or said second pyramid body are made of composite material.

8. A tower for supporting the conductors of a three-phase transmission line according to one or more of the preceding claims, **characterized in that** said first, second, third, fourth, fifth, and sixth insulator have substantially the same length.

9. A tower for supporting the conductors of a three-phase transmission line according to one or more of the preceding claims, **characterized in that** said first, second, third, fourth, fifth, and sixth insulator have a substantially tubular body which is made of composite material and is externally covered with silicone sheds.

10. A tower for supporting the conductors of a three-phase transmission line according to one or more of the preceding claims, **characterized in that** the phase conductors and the corresponding insulators are arranged in an inverted-delta compact configuration.

11. A tower for supporting the conductors of a three-phase transmission line according to one or more of the preceding claims, **characterized in that** it has a lattice structure constituted by a plurality of cold formed elements.
